# EUROPEAN PATENT APPLICATION

(11) **EP 2 890 098 A1**
(43) Date of publication of application: **01.07.2015**
(21) Application number: 13382562.0
(22) Date of filing: 27.12.2013
(51) Int. Cl.: H04M 15/00, H04L 29/06

(54) **Method and apparatus for merging communication information of a user**

(71) Applicant: Telefonica Digital, S.L.U., 28013 Madrid (ES)
(72) Inventor: Neystadt, John (Eugene), 28013 Madrid (ES); Artzi, Lior, 28013 Madrid (ES)
(74) Representative: Carpintero Lopez, Francisco

(57) **Abstract**

A method, apparatus and computer program of merging communication information of a user are disclosed. When a user is authenticated in a communication service (3), any previous communication records generated by anonymous accesses of the user are incorporated to the communication information of the authenticated user (2) in a database (8), such as a data warehouse managed by a data staging (7) area. In order to determine if a first communication information (11) of an unidentified user (1) and a second communication information (12) of the authenticated user (2) belong to the same client, a user device identification code is compared of both communication histories are compared.

## Description

### FIELD OF THE INVENTION

The present invention has its application within the telecommunications sector and, particularly, in the area engaged in communication information management in communication services.

### BACKGROUND OF THE INVENTION - RELATED ART

Many communication services support both authenticated users and unidentified users (also known as anonymous users or guests). Information of communications performed by both unidentified and authenticated users, such as their communication histories, is typically stored in a database for diverse purposes such as billing and data analysis. Communication histories of authenticated users are typically indexed through a user identifier, whereas unidentified users are assigned a guest user identifier which is used to label their communications histories.

However, if a user first accesses the communication service as a guest, and then identifies himself as an authenticated user, two separate communication histories are created. Accordingly, the two separate communication histories are billed and analyzed independently, which can be detrimental to the price paid by the user, or to the accuracy of any data analysis. There is hence the need of a method and apparatus capable of merging the communication information of an authenticated user with any communication information belonging to the same customer while operating anonymously.

US 2013/0163581 A1 discloses a system for merging the communication histories of a single user when accessing a Internet protocol based telephony service from several devices. Nevertheless, in that case the user is authenticated in the communication service when using all the devices. Therefore, this approach cannot be applied to a scenario in which the user accesses the communication service from a single device, first as an anonymous user, and later as an authenticated user.

### SUMMARY OF THE INVENTION

The current invention solves the aforementioned problem by disclosing a method and apparatus for incorporating to the communication information of an authenticated user of a communication service, any previous communication information of the same person while accessing the communication service as an unidentified guest. The information is typically a communication history comprising records of communications performed by each user of the communication service.

In a first aspect of the present invention, a method for merging a first communication information of an unidentified user and a second communication information of an authenticated user is disclosed. Both the first communication information and the second communication information are stored in a database. The second communication information, associated to the authenticated user, may comprise a user identifier as well as a user device identification code. The user device identification code is independent of user authentication, being some of the preferred options for said identification code: an identification code stored in at least a cookie at the user device, an internal identifier of the device, a software identifier of the device, and a network identifier of the device, such as an Internet Protocol (IP) address of the device at the network supporting the communication service. The first communication information, associated to the unidentified user, may also comprise the user device identification code. A guest user identifier is also typically assigned to the unidentified user.

The method comprises two main steps: determining that the authenticated user and the unidentified user are the same customer, and merging their communication information under a single user identifier. In order to determine that the communication information of the authenticated user and the communication information of the unidentified user belong to the same customer, the user device identification codes of both sets of communication information are compared.

If the method determines that both user device identification codes are the same, the first communication information is incorporated to the second communication information, effectively merging all the user data and records. Preferably, upon verification that the unidentified user and the authenticated user are the same customer, a first user identifier of the unidentified user is replaced with a second user identifier associated to the authenticated user in the first communication information stored in the database. After the incorporation is made, the first communication information, associated to the unidentified user, is then preferably removed from the database to avoid redundancies.

In a preferred embodiment of the method, the user identifier associated to any communication record stored in the database is communicated through a Session Initiation Protocol (SIP) header. Also preferably, the database is a data warehouse managed through a data staging area.

In order to merge the first communication information and the second communication information, the first communication information needs to be retrieved by the method for its subsequent integration with the second communication information. Preferably, the first communication information is retrieved from an internal call detail record (CDR) of the communication service. Nevertheless, alternative preferred options comprise retrieving the first communication information directly from the database or data warehouse.

Preferably, the method retrieves and merges the first communication information by means of a Extract Transform and Load process which comprises the following steps:
- extracting the first communication information from the internal CDR;
- transforming the extracted first communication information by replacing the first user identifier (belonging to the unidentified user) with the second user identifier (belonging to the authenticated user);
- loading the transformed first communication information in the database. Since the transformed first communication information is labelled with the second user identifier, the first communication information is therefore incorporated to the second communication information.

Preferably, the method further comprises checking external sources for additional external information of the unidentified user, upon verification that the unidentified user and the authenticated user are the same person. The external information is typically a external history that comprises records of user activities in the external service. Therefore, not only the communication information of the communication service is merged, but also, any external information of additional services whose records are stored in the same database. More preferably, a redundancy check is performed to verify that the external information does not comprise communication records already stored in the communication information of the authenticated user.

In a second aspect of the present invention, an apparatus for merging a first communication information of an unidentified user of a communication service and a second communication information of an authenticated user of the same communication service is provided. The apparatus comprises processing means adapted to (e.g. a processor configured to) determine if the first communication information and the second communication information belong to the same person by comparing an identification code of a user device comprised in both sets of communication information. If the user device identification code of communication records in both sets of communication information match, the records of the first communication information are incorporated to the second communication information in a database.

Preferably, the database is a data warehouse managed by a data staging area. Also preferably, the apparatus further comprises connection means adapted to retrieve any external information of the unidentified user from an external service, upon determining that the communication information of the unidentified user and the communication information of the authenticated user are to be merged.

Finally, in a third aspect of the present invention, a computer program is disclosed, comprising computer program code means adapted to perform the steps of the described method when said program is run on a computer, a digital signal processor, a field-programmable gate array, an application-specific integrated circuit, a micro-processor, a micro-controller, or any other form of programmable hardware and a digital data storage medium is also provided encoding a machine-executable program of instructions to perform any of the methods disclosed. Preferred options and particular embodiments disclosed for the communication histories merging method can also be applied to the communication histories merging apparatus and computer program.

The disclosed method, apparatus and computer program enable efficient and robust communication information management in communications services where both authenticated users and unidentified users are supported. Single billing and consistent data analysis is enabled when the same person first accesses the communication service as an unidentified user and then as an authenticated user. These and other advantages will be apparent with the detailed description of the invention.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 schematically shows the elements of a communication scenario in which a particular embodiment of the communication information merging method and apparatus of the invention are applied.
Figure 2 presents an example of data stored in the elements of the communication scenario before the communication histories are merged.
Figure 3 presents an example of data stored in the elements of the same communication scenario after the communication histories are merged.
Figure 4 is a diagram of interactions between the elements of the communication scenario for a particular embodiment of the method of the invention.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention.

Note that in this text, the term "comprises" and its derivations (such as "comprising", etc.) should not be understood in an excluding sense, that is, these terms should not be interpreted as excluding the possibility that what is described and defined may include further elements, steps, etc.

Also note that the steps of the method of the invention can be performed by processing means and by computer programs integrated in the data staging area of the database, or in an independent module connected to the data staging area.

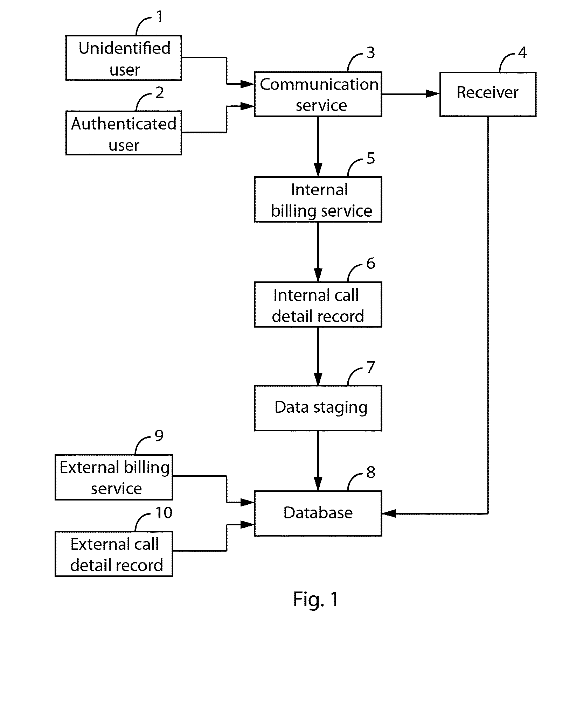

Figure 1 shows a communication scenario in which particular embodiments of the method, apparatus and computer program of the invention are applied. Both an unidentified user 1 and an authenticated user 2 access a communication service 3. The communication service 3 is any service provided over a communication network in which a user has the choice between logging in as an authenticated user 2 or using the communication service 3 anonymously as an unidentified user 1. Several examples of communication services 3 to which particular embodiments of the invention are applied include phone calls, text messages, audio or video content provision, online shopping, etc and any other type of communication service. The communication service 3 can be provided over internet, for example through a Real Time Communication (RTC) service, over conventional phone networks, or over any alternative communication network. Communications established with the communication service 3 may include communications with other users, with servers, and with a receiver 4, such as a support representative or a sales representative, which is part of the communication service 3.

Communications performed by the communication service 3 are billed by an internal billing service 5. An internal Call Detail Record (CDR) 6 keeps information of the communications performed by each user to enable the billing process. Communication records are also stored in a database 8, which is typically a data warehouse which is managed and accessed through a data staging 7 area, also known as staging database. In particular embodiments of the invention, the database 8 is also connected to an external billing service 9 and an external CDR 10 in order to aggregate both internal and external data, and to unify the communication record storage and billing process of several services.

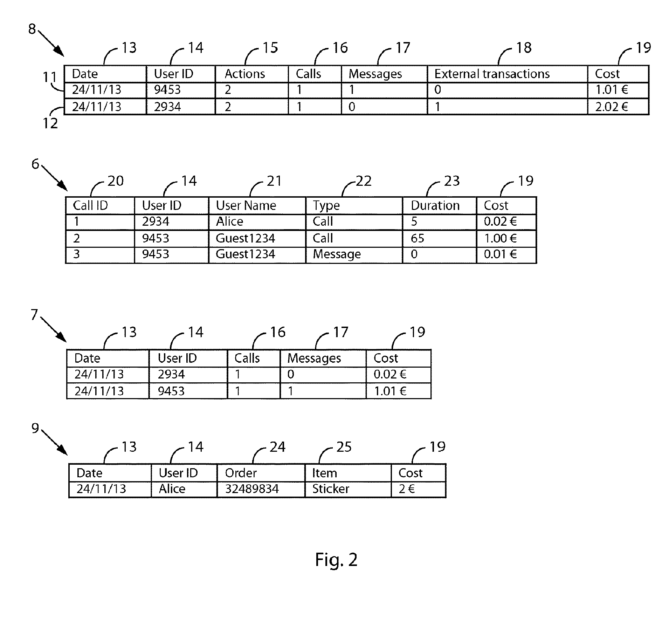

Figure 2 shows an example of the information stored in the elements of the communication scenario, before the communication histories are merged. In this particular example, the database 8 keeps two separate sets of communication information: a first communication information 11 of an unidentified user 1, and a second communication information 12 of an authenticated user 2. The first communication information 11 and second communication information 12 are typically communication histories comprising records of communications provided by the communication service 3, as well as information from any external service. In particular, for each communication history, the database 8 comprises a user identifier 14, which in the case of unidentified users 1 is the guest user identifier. The database 8 further comprises date 13 information; a number of actions 15 performed by the user of the communication service 3, such as calls 16 and messages 17; a number of external transactions 18 performed by the same user in an external service; and the total cost 19 of all the actions 15.

Further details about the first communication history 11 and the second communication history 12 are stored in other elements of the communication scenario such as the internal CDR 6, the data staging 7 area and the external billing service 9. In this particular example, each communication record in the internal CDR 6 comprises a call identifier 20, the user identifier 14, a user name 21, a type 22 of action, a duration 23 of said action, and a cost 19. Communication records are grouped and transferred to the database 8 through the data staging 7 area, which comprises information of date 13, user identifier 14, number of calls 16, number of messages 17 and cost 19. Finally, the external billing service 9, comprises records of external transactions 18, each record comprising a date 13, a user ID 14, an order number 24, an item description 25 and a cost 19.

Note that any additional information about each communication or transaction can be added to each element in particular embodiments of the invention. Specifically, communication records incorporate a user device identification code that enables determining whether the unidentified user 1 and the authenticated user 2 are the same client. Depending on each particular embodiment, the user device identification code is stored in one or more of the following: internal CDR 6, data staging 7 and database 8. Likewise, the user device identification code can be also stored in the external billing service 9 and the external CDR 10.

The user device identification code is any identifier that allows the information merging method and apparatus to determine if two communications originate in the same user device. In a first particular embodiment, the user device identification code is stored at the user device through the use of navigation cookies. In a second particular embodiment, the user device identification code is extracted directly by the communication service from each communication. Some examples of user device identification codes are:
- A computer identifier, such as a Media Access Control (MAC) address.
- A network identifier used to route information to the user device in a communication network, such as an Internet Protocol (IP) address.
- A software identifier, such as an identifier provided by a browser software or by a communication software.

In the particular example of figure 2, the first communication history 11 of the database 8 comprises information of an unidentified user 1 which has performed two actions 15 (one call 16 and one message 17), and no external transactions 18. The second communication history 12 comprises information of an authenticated user 2 which has performed two actions 15 (one call 16 and one external transaction 18). In the internal CDR 6, the user identifier 14 of the unidentified user 1 is associated with a guest user name 21 (e.g. guest1234), whereas the user identifier 14 of the authenticated user 2 is associated with a user name 21 (e.g. Alice).

Once the method and apparatus compare the user device identification code of communication records of the unidentified user 1, and the user device identification code of communication records of the authenticated user 2 and determine that they belong to the same customer, the first communication history 11 and the second communication history 12 are merged in the database 8 under the user identifier 14 of the authenticated user 2. User identifier 14 and user name 21 of the unidentified user 1 are also replaced at the internal CDR 6, the data staging 7 area, the external billing service 9 and the external CDR 10 with the user identifier 14 and user name 21 of the authenticated user 2. Preferably, this is done by means of ETL (Extract, Transform and Load) processes, that is:
- Extracts data from sources (internal CDR 6 and external CDR 10)
- Transforms the extracted data, i.e. replaces the user name 21 of the unidentified user 1 by the user name of the authenticated user 2
- Loads the transformed data into the end target (e.g. database 8)

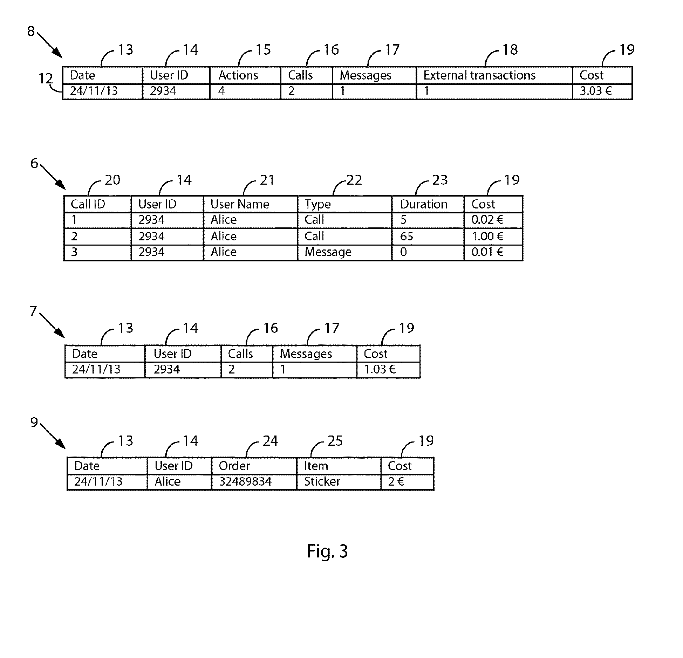

After the contents of the first communication history 11 are incorporated to the second communication history 12, the first communication history 11 is removed from the database 8 to avoid redundancies. Figure 3 shows the final results of this merging process for the same particular example of figure 2.

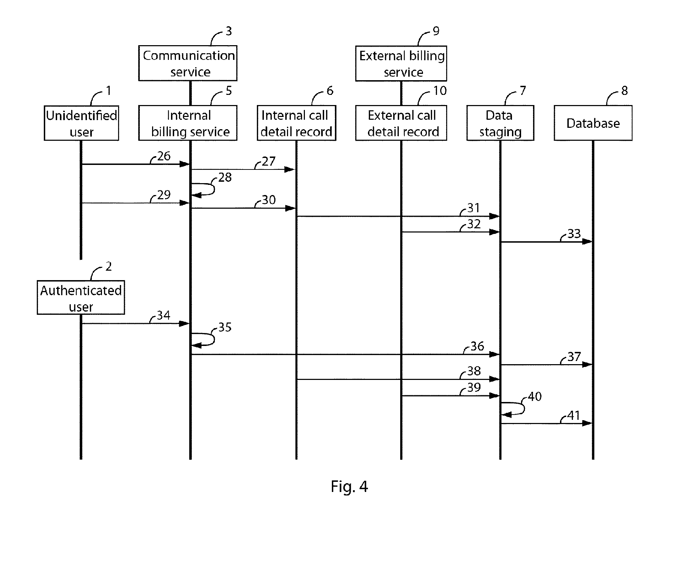

Figure 4 presents in greater detail the interactions between the elements of the communication scenario of figure 1, both when generating the first communication history 11 and the second communication history 12, and when applying a particular embodiment of the method of the invention to merge both communication histories.

First, an unidentified user 1 sends 26 a first communication through the communication service 3. The internal billing service 5, invoked by the communication service 3, generates 27 a first communication record which comprises the cost of the first communication. The communication record further comprises a unique guest user identifier 14 (e.g. guest1234), which is automatically created 28 for the unidentified user 1 upon first use of the communication service 3. The guest user identifier 14 is associated to subsequent connections of the same unidentified user 1 by using any available method, such as setting at least a cookie on a user browser or on a communication software, or fingerprinting a user device identification code in the communication records. Furthermore, when communication requests are sent, the guest user identifier 14 is included to ensure that subsequent communication records are associated with the same unidentified user 1. In SIP protocol, this is done, for example, by including the guest user identifier in SIP register request Uniform Resource Identifier (URI). In other communication protocols, the guest user identifier 14 is transmitted by specific methods of each protocol. Accordingly, further communications by the unidentified user 1 are then established 29, generating 30 subsequent communication records.

Communication records are periodically moved 31 to data staging 7, which aggregates the communication records and summarize them through key performance indicators, such as cost 19, number of calls 16 and number of messages 17. The periodicity at which communication records are moved 31 is a configurable parameter.

External billing services 9 also create external CDR 10 records of external transactions 18. External transaction records are also transmitted 32 to the data staging 7 for correlation and aggregation. For example, the communication service 3 can be a phone communication service, while the external service can be a sale of a phone managed by the operator of the communication service 3.

Aggregated data from the internal CDR 6 and the external CDR 10 are periodically transferred 33 from the data staging 7 area to the database 8 (i.e. the data warehouse). Periodicity of aggregated data transfer 33 is also configurable.

After one or more communications, the unidentified user 1 decides to authenticate 34, becoming authenticated user 2. Authentication can be performed while communicating to a receiver 4 of a customer support or sales support service, or by an authentication platform provided by the communication service 3. A user identifier 14 is assigned 35 to the authenticated user 2. Furthermore, the user device identification code of the authenticated user 2 is used to locate previous records of unidentified users 1 belonging to the same customer. In some embodiments, the techniques used to determine the user device identification code of the authenticated user 2 are the same used to ensure that multiple accesses of the same unidentified user 1 are assigned the same guest user identifier 14 (e.g. stored cookies and fingerprinting). In embodiments using SIP protocol, both the user identifier 14 and the user device identification code are included in fields of the SIP headers. In a particular example, the user identifier 14 is included in the 'From' field.

Aggregated data of the unidentified user 1 is removed 36 from data staging 7, and therefore, eliminated 37 from the database 8. Furthermore, communication records of the unidentified user 1 are extracted 38 from the internal CDR 6, as well as retrieved 39 from any external CDR 10. At data staging 7, communication records of the unidentified user 1 are assigned 40 the user identifier 14 of the authenticated user 2, preferably by means of an ETL (Extract, Transform and Load) process. Communication records are correlated to ensure that a single communication is not recorded and billed multiple times. This can be performed by matching call identifiers 20 or by any other data correlation technique known in the state of the art. Internal CDR 6 and external CDR 10 are also informed that the guest user identifier 14 of the unidentified user 1 need to be replaced by the user identifier 14 of the authenticated user. Note that in particular embodiments of the invention, communication records of the unidentified user 1 are retrieved from the first communication history 11 stored at the database 8, before erasing said first communication history 11.

Finally, the communication records of the unidentified user 1, now labeled with the user identifier 14 of the authenticated user 2, are stored 41 in the database 8, hence being incorporated to the second communication history 12. Robust and efficient communication record management in a communication service with both unidentified and authenticated users is therefore provided by the method and apparatus of the invention.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. Some preferred embodiments of the invention are described in the dependent claims which are included below.

Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method of merging first communication information (11) of an unidentified user (1) of a communication service (3) and second communication information (12) of an authenticated user (2) of the communication service (3), being the first communication information (11) and the second communication information (12) stored in a database (8), **characterized in that** the method comprises:
- comparing a first identification code of a user device of the first communication information (11) and a second identification code of the user device of the second communication information (12);
- if the first identification code and the second identification code are the same, then incorporating the first communication information (11) to the second communication information (12) in the database (8).

2. Method according to claim 1 wherein the method further comprises extracting the first identification code and the second identification code from at least a cookie stored in the user device.

3. Method according to claim 1 wherein the first identification code and the second identification code are internal identifiers of the user device, being the internal identifiers transmitted to the communication service (3).

4. Method according to claim 1 wherein the first identification code and the second identification code are software identifiers of a software of the user device, being the software identifiers transmitted to the communication service (3).

5. Method according to claim 1 wherein the first identification code and the second identification code are network identifiers of the user device in a network providing the communication service (3), being the network identifier transmitted to the communication service (3).

6. Method according to any of the previous claims where the database (8) is a data warehouse and the step of incorporating the first communication information (11) to the second communication information (12) is managed by a data staging (7) area.

7. Method according to any of the previous claims where the step of incorporating the first communication information (11) to the second communication information (12) further comprises replacing a first user identifier (14) of the unidentified user (1) with a second user identifier (14) of the authenticated user (2) in the first communication information (11) stored in the database (8).

8. Method according to any of the previous claims further comprising, if the first identification code and the second identification code are the same, retrieving the first communication information (11) from an internal call detail record (6).

9. Method according to claim 8 where the first communication information (11) is retrieved from the internal call detail record (6) by means of an Extract Transform and Load process which:
- extracts the first communication information (11) from the internal call detail record (6);
- transforms the extracted first communication information (11) by replacing a first user identifier (14) of the unidentified user (1) with a second user identifier (14) of the authenticated user (2);
- loads the transformed first communication information (11) in the database (8).

10. Method according to any of claims 1 to 7 further comprising, if the first identification code and the second identification code are the same, retrieving the first communication information (11) from the database (8).

11. Method according to any of the previous claims further comprising, if the first identification code and the second identification code are the same, retrieving an external information of the unidentified user (1) from an external service and incorporating to the second communication information (12) in the database (8) data from the external communication information.

12. Method according to claim 11 further comprising checking for redundant information between the external information and the second communication information (12).

13. Method according to any of the previous claims where the first communication information (11) and the second communication information (12) are communication histories comprising records of communications performed by the communication service (3).

14. Apparatus of merging a first communication information (11) of an unidentified user (1) of a communication service (3) and a second communication information (12) of an authenticated user (2) of the communication service (3), being the first communication information (11) and the second communication information (12) stored in a database (8), **characterized in that** the apparatus comprises processing means adapted to:
- compare a first identification code of a user device of the first communication information (11) and a second identification code of the user device of the second communication information (12);
- if the first identification code and the second identification code are the same, then incorporate the first communication information (11) to the second communication information (12) in the database (8).

15. A computer program comprising computer program code means adapted to perform the steps of the method according to any claims from 1 to 13 when said program is run on a computer, a digital signal processor, a field-programmable gate array, an application-specific integrated circuit, a micro-processor, a microcontroller, or any other form of programmable hardware.
